# EUROPÄISCHE PATENTSCHRIFT

(11) **EP 1 602 577 B1**
(45) Veröffentlichungstag und Bekanntmachung des Hinweises auf die Patenterteilung: **26.12.2012**
(21) Anmeldenummer: 05006519.2
(22) Anmeldetag: 24.03.2005
(51) Int. Cl.: B64D 11/02, A62B 25/00, B64D 25/00, B64D 13/00

(54) **Sauerstoffnotversorgungseinrichtung**
Emergency oxygen supply device
Dispositf d'alimentation d'oxygène d'urgence

(30) Priorität: 01.06.2004 DE 102004026649
(43) Veröffentlichungstag der Anmeldung: 07.12.2005
(73) Patentinhaber: B/E Aerospace Systems GmbH, 23560 Lübeck (DE)
(72) Erfinder: Westphal, Andreas, 23701 Eutin (DE); Lembke, Jens, 23564 Lübeck (DE); Wotha, Gerd, 23626 Warnsdorf (DE)
(74) Vertreter: Vollmann, Heiko

(56) Entgegenhaltungen:
- DE-U1- 8 116 585
- US-A- 4 154 237
- US-A- 5 154 374

## Beschreibung

Die Erfindung betrifft eine Sauerstoffnotversorgungseinrichtung für ein Flugzeug mit den im Oberbegriff des Anspruchs 1 angegebenen Merkmalen.

Um Passagiere und Servicepersonal bei plötzlichem Druckabfall in der Kabine mit Sauerstoff versorgen zu können, stehen in Flugzeugen Sauerstoffnotversorgungseinrichtungen zur Verfügung. Diese befinden sich im Passagierbereich in so genannten Personal-Service-Unit-Kanälen oder Bereichen, die an der Kabinendecke über den Passagiersitzen angeordnet sind. Hierfür sind in den Personal-Service-Unit-Kanälen neben der Luftzufuhr der Klimaanlage, elektrischen Anzeigen, der Beleuchtung etc. Behältnisse zur Unterbringung der Atemmasken für die Sauerstoffzufuhr und deren Auslösemechanik vorgesehen. Diese in den Personal-Service-Unit-Kanälen angeordneten Behältnisse weisen an der Unterseite eine Klappe auf, die sich im Fall einer Dekompression der Passagierkabine öffnet, so dass die Atemmasken, an so genannten Lanyards hängend, schwerkraftbedingt herabfallen. Die Sauerstoffzufuhr wird dann über das Lanyard ausgelöst. Hierunter versteht man ein Zugmittel, das zwischen der Maske und dem Auslösemechanismus der Sauerstoffzufuhr angebracht ist. Die Maske ist mit einem Versorgungsschlauch mit der Sauerstoffversorgung verbunden.

Der Auslösemechanismus ist abhängig von der Art der Sauerstoffversorgung. Je nach Flugzeugtyp bzw. Flugzeughersteller wird im Allgemeinen ein zentrales oder ein dezentrales Versorgungssystem für die Sauerstoffzufuhr eingesetzt.

Das zentrale Versorgungssystem sieht einen zentralen Sauerstoffspeicher oder eine mit Molekularsieben arbeitende Einrichtung vor, von demselben aus Sauerstoff über ein Rohrleitungsnetz allen Sauerstoffnotversorgungseinrichtungen zugeführt wird. Die Sauerstoffzufuhrleitungen münden in die Aufbewahrungsbehälter für die Sauerstoffmasken. Dort kann die Sauerstoffzufuhr über Auslöseventile, so genannte "Manifolds", aktiviert werden.

Bei dem dezentralen Versorgungssystem weist jeder Aufbewahrungsbehälter einen eigenständigen Gasgenerator auf, in dem auf chemischem Wege Sauerstoff erzeugt wird. Die benötigten Chemikalien werden in Edelstahlgaspatronen zur Verfügung gestellt. Über einen Zündvorgang wird in der Patrone eine exotherme Reaktion ausgelöst, bei der reiner Sauerstoff freigesetzt wird.

Durch Ziehen an dem Lanyard wird bei dem zentralen Sauerstoffversorgungssystem das Manifold geöffnet und die Sauerstoffzufuhr aktiviert. Bei der dezentralen Versorgung wird über das Lanyard eine Zündvorrichtung des Sauerstoffgenerators aktiviert. Die Länge des Lanyards definiert die Höhe, in der die Atemmaske von der Versorgungseinheit herabhängt.

Durch Heranziehen der Atemmaske wird auch auf das Lanyard eine Zugkraft ausgeübt und so der Auslösemechanismus für die Sauerstoffzufuhr ausgelöst. Sobald das Lanyard den Auslösemechanismus aktiviert hat, bedingt ein weiteres Ziehen, dass sich das Lanyard von der Auslösemechanik trennt, so dass die gesamte Länge des Versorgungsschlauches der Maske freigegeben wird und die Atemmaske von einer Person definierter Größe an das Gesicht herangezogen werden kann. Für Schlafboxen von Großflugzeugen sind an den Atemmasken weitere Zugmittel mit Greifteilen, so genannte Pullflags vorgesehen. Hierbei handelt es sich um lange Schnüre, welche an der Maske befestigt sind und dafür sorgen, dass die am Lanyard hängende Maske auch dann erreichbar ist, wenn sich der darunter befindliche Sitz in einer Liegeposition befindet. Damit das Pullflag auch zuverlässig herunterfällt, ist es an seinem unteren Ende gewichtsbeschwert.

Aus US 5,154,374 A ist die Anordnung einer Sauerstoffnotversorgungseinrichtung in einem Passagiersitz bekannt. Hier sind eine Sauerstoffquelle in einem Behälter unterhalb eines Sitzpolsters und Sauerstoffmasken in einem Fach im oberen Bereich einer Rücklehne des Passagiersitzes angeordnet. Durch die Rücklehne verlaufen Versorgungsschläuche von der Sauerstoffquelle zu den Sauerstoffmasken. Des Weiteren führen Lanyards von einem Auslösemechanismus der Sauerstoffquelle zu den Sauerstoffmasken. Die Lanyards sind an den Sauerstoffmasken befestigt. In einer Notsituation öffnet sich ein schwenkbarer Verschluss des Fachs, in dem die Sauerstoffmasken angeordnet sind. Die Sauerstoffmasken sind nun frei zugänglich und können von den Passagieren aus dem Fach entnommen werden. Sobald ein Passagier eine Sauerstoffmaske an sich heranzieht, wird über das daran befestigte Lanyard der Auslösemechanismus der Sauerstoffquelle aktiviert.

Großflugzeuge können eine Sitzanordnung aufweisen, die Sitzreihen von vier oder mehr nebeneinander liegenden Sitzplätzen vorsieht. In diesen Sitzreihen müssen die Sauerstoffmasken auch für die Passagiere auf den äußeren Sitzplätzen, die neben und nicht unter dem Personal-Service-Unit-Kanal angeordnet sein können, schnell erreichbar sein.

Eine Lösung für solche neben der Personal-Service-Unit anzuordnenden Masken stellt das US-Patent 4,154,237 dar. Es ist der nächstliegende Stand der Technik und offenbart den Oberbegriff des unabhängigen Anspruchs 1. Hier werden nach dem Öffnen des Maskenbehälters neben den freihängenden Atemmasken auch Atemmasken freigesetzt, die an einer Schiene hängend, horizontal zu den äußeren Sitzpositionen ausgefahren werden. Auf diese Weise hängen die Atemmasken an den Versorgungsschläuchen über den seitlichen Sitzen, von denen aus die Atemmasken sonst schlecht zu erreichen wären.

Nachteilig bei dieser Anordnung ist es, dass die zur Auslösung der Sauerstoffzufuhr erforderlichen Lanyards nach wie vor aus dem Maskenbehälter nach unten herausfallen und von den äußeren Sitzpositionen schlecht zugänglich sind. Des Weiteren muss die Schiene aufgrund der Momentenbelastung beim Heranziehen der Sauerstoffmasken sehr stabil ausgeführt sein, was ein höheres Gewicht bedingt. In Flugzeugen, bei denen die seitlich neben den Personal-Service-Unit-Kanal angeordneten Gepäckfächer bzw. Hutablagen, so genannte "Hatracks" absenkbar vorgesehen sind, würde ein abgesenktes Hatrack den Einsatz dieser Anordnung gänzlich verhindern, da es das Ausfahren der Schiene blockiert und die Schiene mit den Sauerstoffmasken in der Personal-Service-Unit festgehalten würde.

Aufgabe dieser Erfindung ist es, eine Sauerstoffnotversorgungseinrichtung zu schaffen, bei der die Zugänglichkeit der Sauerstoffmasken auch von Sitzen, die sich seitlich neben den Maskenausfallpunkten befinden, einfach realisiert wird, insbesondere auch dann, wenn die Hatracks absenkbar vorgesehen sind.

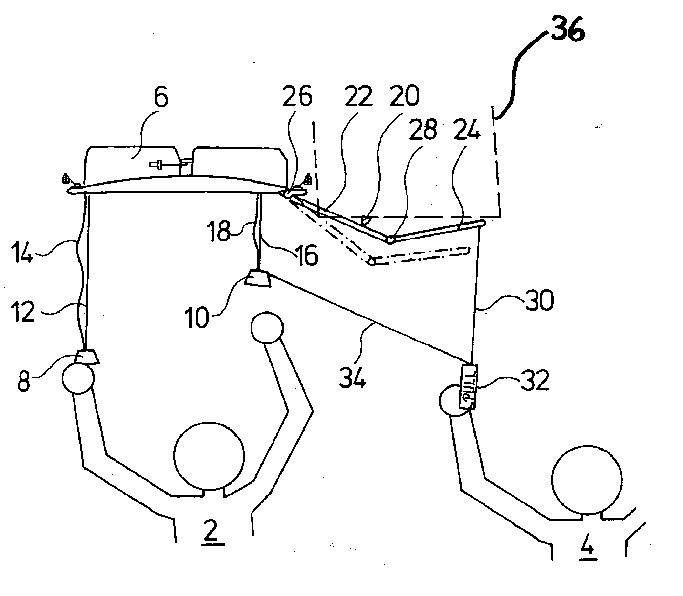

Diese Aufgabe wird erfindungsgemäß durch eine Sauerstoffnotversorgungseinrichtung mit den im Anspruch 1 angegebenen Merkmalen gelöst. Vorteilhafte Weiterbildungen der Erfindung ergeben sich aus den Unteransprüchen der nachfolgenden Beschreibung und der Zeichnung.

Die erfindungsgemäße Sauerstoffnotversorgungseinrichtung für ein Flugzeug beinhaltet ein Behältnis, in dem mindestens eine Sauerstoffmaske angeordnet ist. Das Behältnis weist einen Deckel auf, der sich im Auslösefall öffnet und die Sauerstoffmaske mit Handhabungsmitteln zum Erreichen und Heranziehen der Sauerstoffmaske sowie mit Mitteln zum Auslösen der Sauerstoffzufuhr zur Maske freigibt. Dabei weisen die Handhabungsmittel mindestens einen Arm auf, der im Auslösefall durch die Deckelöffnung aus dem Behältnis in eine Position seitlich zur Maskenfallachse ausfährt.

Bei der erfindungsgemäßen Sauerstoffnotversorgungseinrichtung ist, wie üblich, das Behältnis, in dem die Atemmasken aufbewahrt werden in dem Personal-Service-Unit-Kanal angeordnet. Im Auslösefall öffnet sich der Deckel des Behältnisses und alle Sauerstoffmasken fallen an den Lanyards hängend heraus. Der Fall der Sauerstoffmasken wird durch die Länge der Lanyards, deren erstes Ende an der Sauerstoffmaske und deren zweites Ende an der Auslösemechanik der Sauerstoffzufuhr befestigt ist, gestoppt. Zur Versorgung eines neben der Maskenausfallpunkten angeordneten Sitzes fährt seitlich zur Fallachse der Sauerstoffmasken ein Arm durch die Deckelöffnung aus. In seiner Endposition befindet sich der Arm über bzw. nahe den äußeren Sitzpositionen.

An dem freien Ende des Arms ist vorteilhaft ein Führungsmittel angeordnet, welches sich in Fallrichtung der Sauerstoffmaske erstreckt. Auf diese Weise befindet sich das Führungsmittel in der Reichweite eines Passagiers, der von seiner Sitzposition aus die Sauerstoffmasken nicht unmittelbar erreichen kann.

Das Führungsmittel weist zweckmäßigerweise an seinem von dem Arm entfernten Ende ein Greifteil auf. Dieses hängt in Reichweite des Passagiers und dann kann schnell mit der Hand gegriffen werden.

Neben dem Führungsmittel ist an dem Greifteil bevorzugt ein Zugmittel in Form einer Schnur oder eines Drahtes zur Verbindung mit der Sauerstoffmaske angeordnet. Durch Ziehen am Greifteil wird die Verbindung zwischen dem Arm und dem Führungsmittel gelöst. Gleichzeitig wird die Sauerstoffmaske über das Zugmittel an die Sitzposition herangezogen. Dabei aktiviert das an der Sauerstoffmaske befestigte Lanyard die Sauerstoffzufuhr und die Sauerstoffmaske ist einsatzbereit.

Vorteilhaft ist der Arm als Schwenkhebel ausgebildet. Beim notfallmäßigen Öffnen des Behälterdeckels der Sauerstoffversorgung klappt so der Arm nach unten aus der Deckelöffnung und schwenkt teilkreisförmig in eine horizontale bzw. annähernd horizontale Position, über den seitlich der Deckelöffnung angeordneten Sitz. Dabei kann die Schwenkkraft, beispielsweise durch die Schwerkraft, eine Federkraft oder durch einen pneumatischen Antrieb oder Kombinationen davon eingeleitet werden.

In einer bevorzugten Ausführung ist der Arm in Ausfahr- bzw. Ausschwenkrichtung federvorgespannt. Oberhalb der mittleren Sitzreihen sind zu beiden Seiten der Personal-Service-Unit Hatracks, das heißt Stauräume angeordnet. Diese Hatracks sind bei Flugzeugen mit einer besonders großen Kabinenhöhe nur sehr schwer zu erreichen. Aus diesem Grund können diese Hatracks absenkbar vorgesehen sein. Befindet sich ein Hatrack während des Auslösefalls der Sauerstoffnotversorgung im abgesenkten Zustand, so verhindert die erfindungsgemäße Ausbildung des Arms dessen Behinderung und/oder Beschädigung. Ein Blockieren des Arms durch eine abgesenkte Hatrack ist nicht möglich. Aufgrund der Federvorspannung des Arms weicht dieser gegebenenfalls aus.

Vorteilhaft kann der Arm einteilig ausgebildet sein. In der normalen Flugsituation ist der Arm in dem Maskenbehälter angeordnet und fährt in einer Notsituation nach dem Öffnen der Behälterklappe selbsttätig nach unten und zur Seite aus dem Behälter nach außen aus. Ein solcher einteiliger Arm kann beispielsweise aus biegeelastischem Kunststoff gebildet sein oder aus Memorymetall, so dass er selbsttätig expandiert.

Bevorzugt ist der Arm mehrteilig ausgebildet. Dabei besteht der Arm beispielsweise aus zwei oder mehreren Elementen, die über Gelenke miteinander verbunden sind. Die Gelenke ermöglichen es, den Arm zusammenzuklappen und zusammengeklappt besonders platzsparend in dem Behälter der Sauerstoffversorgung anzuordnen. Im Einsatzfall klappt der zusammengefaltete Arm aus der Deckelöffnung aus, entfaltet sich und nimmt seine vorgesehene Position ein.

Auch kann zumindest auch ein Teil des Arms teleskopierbar sein. So kann der Arm beispielsweise als Teleskopschiene oder Teleskopzylinder ausgebildet sein. In seinem nichtteleskopierten Zustand kann der Arm raumsparend in dem Maskenbehälter aufbewahrt werden und fährt im Einsatzfall aus der Behälteröffnung aus, um außerhalb des Maskenbehälters beispielsweise durch Schwerkraft, Federkraft oder pneumatisch zu expandieren.

Die Erfindung ist nachfolgend anhand eines in einer Zeichnung dargestellten Ausführungsbeispiels erläutert. Die Figur zeigt eine Prinzipskizze der erfindungsgemäßen Sauerstoffnotversorgungseinrichtung.

In der Figur sind zwei Personen 2 und 4 dargestellt, von denen sich eine erste Person 2 direkt unter einem Behältnis 6 befindet, in dem die Anschlüsse für die Sauerstoffzufuhr der Sauerstoffnotversorgungseinrichtung in an sich bekannter und hier nicht im Einzelnen beschriebener Weise angeordnet sind. An dem Behältnis 6 sind eine erste Sauerstoffmaske 8 und eine zweite Sauerstoffmaske 10 notfallbedingt freigegeben dargestellt. Dabei hängt die erste Sauerstoffmaske 8 an einem Lanyard 12 (Reißleine) und ist über einen Versorgungsschlauch 14 mit der Sauerstoffzufuhr verbunden. Die zweite Sauerstoffmaske 10 ist an einem Lanyard 16 angebunden und wird über den Versorgungsschlauch 18 mit Sauerstoff versorgt. Die hier gezeigte Anzahl an Sauerstoffmasken 8, 10 ist rein exemplarisch. Im Normalfall wird die Anzahl der Masken, die in dem Behältnis 6 angeordnet sind, durch die Anzahl der Sitzplätze der entsprechenden Sitzreihe bestimmt, wobei zusätzliche Masken aufgrund von Sicherheitsvorschriften vorgesehen sind.

Der Figur ist zu entnehmen, dass die Länge der Lanyards 12 und 16 unterschiedlich ist. So ist das Lanyard 16 so kurz ausgebildet, dass sich die zweite Sauerstoffmaske 10 außerhalb der Reichweite der unter dieser Sauerstoffmaske 10 befindlichen Person 2 befindet. Hingegen ermöglicht die Länge des Lanyards 12 eine Fallhöhe der ersten Sauerstoffmaske 8, die diese in die Reichweite der ersten Person 2 verbringt.

An dem Behältnis 6 ist ferner ein Gelenkarm 20 über ein Gelenk 26 angebunden. Der Arm 20 ist zweiteilig ausgebildet und besteht aus einem ersten Armteil 22 und einem zweiten Armteil 24. Ein Gelenk 12 verbindet das erste Armteil 22 mit dem zweiten Armteil 24. Während des normalen Flugbetriebs ist der Arm 20 ebenso wie alle anderen Bestandteile der Sauerstoffnotversorgung in dem verschlossenen Behältnis 6 angeordnet. Das Gelenk 28 ermöglicht es, die beiden Teile des Arms 20 zusammenzuklappen, was seine Einbaugröße in dem Behältnis 6 verringert. Im Einsatzfall schwenkt der Arm 20 über das Gelenk 26 aus dem Behältnis 6 heraus, wobei die beiden Teile des Arms 20 über das Gelenk 28 aufklappen, so dass der Arm 20 zu seiner vollen Länge expandiert. Hierzu sind in den Gelenken 26 und 28 entsprechende (nicht dargestellte) Federelemente angeordnet.

An dem freien Ende des Arms 20 ist ein Führungsmittel 30 befestigt. Das Führungsmittel 30 ist als Schnur ausgebildet. An seinem freien Ende ist ein Greifteil 32, eine so genannte "Pull Flag" angeordnet. Das Führungsmittel 30 ist so lang, dass das Greifteil 32 in die Reichweite der Person 4 gelangt. An dem Greifteil 32 ist neben dem Führungsmittel 30 auch das eine Ende einer Zugschnur 34 befestigt, deren anderes Ende an der Sauerstoffmaske 10 angebunden ist.

Zieht die Person 4 an dem Greifteil 32, so löst sich die Anbindung des Führungsmittels 30 von dem Arm 20. Da die hierfür erforderliche Lösekraft gegen die Schenkkraft des Arms 20 wirkt, sollte diese Lösekraft entsprechend geringer als die Schwenkkraft bemessen sein.

Über die noch bestehende Verbindung des Greifteils 32 mit der Zugschnur 34 kann die zweite Sauerstoffmaske 10 von der Person 4 herangezogen werden. Durch das Heranziehen der Sauerstoffmaske 10 wird auch eine Zugkraft auf das Lanyard 16 ausgeübt und so die Sauerstoffzufuhr aktiviert, so dass die Sauerstoffversorgung der Person 4 über die herangezogene Sauerstoffmaske 10 in Verbindung mit deren Versorgungsschlauch 18 sichergestellt ist.

In der Figur ist auch ein Hatrack 36 in Form einer unterbrochenen Linie skizziert. Das Hatrack 36 befindet sich in einem abgesenkten Zustand und versperrt die eigentliche in durchgezogenen Linien dargestellte Endposition des Arms 20. Aufgrund der gelenkigen Anbindung des Arms 20 an dem Behältnis 6 wird der Arm 20 jedoch nicht beschädigt, sondern schwenkt in eine in der Figur strichpunktiert dargestellte Position. Auch in dieser Position ist das Greifteil in Reichweite einer Person 4, so dass diese die Sauerstoffmaske 10 heranziehen kann.

### Bezugszeichenliste

- 2: Person
- 4: Person
- 6: Behältnis
- 8: Sauerstoffmaske
- 10: Sauerstoffmaske
- 12: Lanyard
- 14: Versorgungsschlauch
- 16: Lanyard, Reißleine
- 18: Versorgungsschlauch
- 20: Gelenkarm
- 22: erstes Armteil
- 24: zweites Armteil
- 26: Gelenk
- 28: Gelenk
- 30: Führungsmittel
- 32: Greifteil
- 34: Zugschnur
- 36: Hatrack

## Patentansprüche

1. Sauerstoffnotversorgungeinrichtung für ein Flugzeug mit einem Behältnis (6), in dem mindestens eine Sauerstoffmaske (8, 10) angeordnet ist, wobei das Behältnis (6) einen Deckel aufweist, der im Auslösefall öffnet und die Sauerstoffmaske (8, 10) freigibt, mit Handhabungsmitteln zum Erreichen und Heranziehen der Sauerstoffmaske (8, 10) und mit Mitteln (12, 16) zum Auslösen der Sauerstoffzufuhr zur Maske, **dadurch gekennzeichnet, dass** die Handhabungsmittel mindestens einen Arm (20) aufweisen, der im Auslösefall durch die Deckelöffnung aus dem Behältnis (6) in eine Position seitlich zur Maskenfallachse ausfährt.

2. Sauerstoffnotversorgungeinheit nach Anspruch 1, **dadurch gekennzeichnet, dass** an dem freien Ende des Arms (20) ein Führungsmittel (30) angeordnet ist, welches sich parallel zur Fallrichtung der Sauerstoffmaske (8, 10) erstreckt.

3. Sauerstoffnotversorgungeinheit nach Anspruch 2, **dadurch gekennzeichnet, dass** das Führungsmittel (30) an seinem von dem Arm (20) entfernten Ende ein Greifteil (32) aufweist.

4. Sauerstoffnotversorgungeinheit nach Anspruch 2, **dadurch gekennzeichnet, dass** an dem Führungsmittel (30) eine Zugschnur (34) zur Verbindung mit der Sauerstoffmaske (10) angeordnet ist.

5. Sauerstoffnotversorgungeinrichtung nach einem der vorangehenden Ansprüche, **dadurch gekennzeichnet, dass** der Arm (20) als Schwenkhebel ausgebildet ist.

6. Sauerstoffnotversorgungeinrichtung nach Anspruch 5, **dadurch gekennzeichnet, dass** der Arm (20) in Ausfahr-/Ausschwenkrichtung federvorgespannt ist.

7. Sauerstoffnotversorgungeinrichtung nach einem der vorangehenden Ansprüche, **dadurch gekennzeichnet, dass** der Arm (20) einteilig ausgebildet ist.

8. Sauerstoffnotversorgungeinrichtung nach einem der Ansprüche 1 bis 6, **dadurch gekennzeichnet, dass** der Arm (20) mehrteilig ausgebildet ist.

9. Sauerstoffnotversorgungeinrichtung nach Anspruch 8, **dadurch gekennzeichnet, dass** ein Teil des Arms (20) teleskopierbar ist.

## Claims

1. An oxygen emergency supply means for an aircraft with a receptacle (6) in which at least one oxygen mask (8, 10) is arranged, wherein the receptacle (6) comprises a lid which opens in the case of activation and releases the oxygen mask (8, 10), with handling means for reaching and applying the oxygen mask (8, 10), and with means (12, 16) for activating the oxygen supply to the mask, **characterized in that** the handling means comprise at least one arm (20) which in the activation case extends out of the receptacle (6) through the lid opening into a position laterally of the mask drop axis.

2. An oxygen emergency supply unit according to claim 1, **characterized in that** a guide means (30) is arranged at the free end of the arm (20) and extends parallel to the drop direction of the oxygen mask (8, 10).

3. An oxygen emergency supply unit according to claim 2, **characterized in that** the guide means (30) at its end distanced to the arm (20) comprises a grip part (32).

4. An oxygen emergency supply unit according to claim 2, **characterized in that** a pull cord (34) for connection to the oxygen mask (10) is arranged on the guide means (30).

5. An oxygen emergency supply means according to one of the preceding claims, **characterized in that** the arm (20) is designed as a pivot lever.

6. An oxygen emergency supply means according to claim 5, **characterized in that** the arm (20) is spring biased in the extension/pivot-out direction.

7. An oxygen emergency supply means according to one of the preceding claims, **characterized in that** the arm (20) is designed as one piece.

8. An oxygen emergency supply means according to one of the claims 1 to 6, **characterized in that** the arm (20) is designed of more than one part.

9. An oxygen emergency supply means according to claim 8, **characterized in that** a part of the arm (20) is telescopic.

## Revendications

1. Dispositif d'alimentation de secours en oxygène pour un avion, comprenant un récipient (6) dans lequel est disposé au moins un masque à oxygène (8, 10), le récipient (6) présentant un couvercle qui s'ouvre et libère le masque à oxygène (8, 10) en cas de déclenchement, des moyens de manipulation permettant d'atteindre et de tirer à soi le masque à oxygène (8, 10), et des moyens (12, 16) servant à déclencher l'arrivée de l'oxygène dans le masque, **caractérisé en ce que** les moyens de manipulation présentent au moins un bras (20) qui, en cas de déclenchement, sort du récipient (6) par l'ouverture du couvercle et prend une position située latéralement à l'axe de la chute du masque.

2. Unité d'alimentation de secours en oxygène selon la revendication 1, **caractérisée en ce qu'**à l'extrémité libre du bras (20) est disposé un moyen de guidage (30) qui s'étend parallèlement à la direction de la chute du masque à oxygène (8, 10).

3. Unité d'alimentation de secours en oxygène selon la revendication 2, **caractérisée en ce que** le moyen de guidage (30) présente un élément de prise (32) à son extrémité qui est éloignée du bras (20).

4. Unité d'alimentation de secours en oxygène selon la revendication 2, **caractérisée en ce qu'**au niveau du moyen de guidage (30) est attaché un cordon de traction (34) servant à la liaison avec le masque à oxygène (10).

5. Dispositif d'alimentation de secours en oxygène selon l'une des revendications précédentes, **caractérisé en ce que** le bras (20) est exécuté en tant que levier pivotant.

6. Dispositif d'alimentation de secours en oxygène selon la revendication 5, **caractérisé en ce que** le bras (20) est précontraint élastiquement dans le sens de la sortie / du pivotement.

7. Dispositif d'alimentation de secours en oxygène selon l'une des revendications précédentes, **caractérisé en ce que** le bras (20) est exécuté d'une seule pièce.

8. Dispositif d'alimentation de secours en oxygène selon l'une des revendications 1 à 6, **caractérisé en ce que** le bras (20) est exécuté en plusieurs pièces.

9. Dispositif d'alimentation de secours en oxygène selon la revendication 8, **caractérisé en ce qu'**une partie du bras (20) est à coulissement télescopique.
